# EUROPEAN PATENT APPLICATION

(11) **EP 1 728 656 A1**
(43) Date of publication of application: **06.12.2006**
(21) Application number: 05011625.0
(22) Date of filing: 30.05.2005
(51) Int. Cl.: B60H 1/00, B60H 1/22, B60H 1/03, B60H 1/06

(54) **Heating and/or air-conditioning installation**

(71) Applicant: Delphi Technologies, Inc., Troy, MI 48007 (US)
(72) Inventor: Nystrom, Mikael, 4940 Bascharage (LU)
(74) Representative: Jones, Keith William

(57) **Abstract**

The invention provides for an improved Heating and/or Air-Conditioning Installation for heating and/or ventilation of a passenger compartment (12) of a vehicle, more particularly a commercial vehicle, such as a truck (10), said installation comprising an air inlet (22), an evaporator or air cooler (28), a parking heater (32), and a distribution case (46), wherein the parking heater (32) is provided downstream of the evaporator (28) which reduces condensate issues such as flash-fogging and improves maximum airflow for cooling performance.

## Description

The present invention relates to a heating and/air-conditioning installation for heating and/or ventilation of a passenger compartment of a vehicle, more particularly a commercial vehicle, such as a truck. Installations as above are referred to hereinafter shortly as HVAC installation (HVAC = heat, ventilation, air-conditioning) or simply as the installation.

The prior art installations suffer from the disadvantage of condensate, flash-fogging and limited heat performance.

The object of the invention is to provide a remedy for the defects of the prior art. Furthermore, it is an object of the present invention to provide for an installation with fast start-up heating and cooling both for mobility and parking. These objects are achieved by means of a heating and/or air-conditioning installation for heating and/or ventilation of a passenger compartment of a vehicle, more particularly a commercial vehicle, such as a truck, said installation comprising an air inlet, an evaporator or air-cooler, a parking heater and a distribution case where the parking heater is provided downstream of the evaporator.

The essential advantages of the invention are that providing the parking heater downstream of the evaporator or air-cooler, reduces condensate issues such as flash-fogging and improves maximum airflow for cooling performance.

The dependent claims outline advantageous forms of embodiments of the invention.

If the installation comprises at least one recirculation air inlet inside the passenger compartment and a duct pipe from the or each recirculation air inlet to the air inlet which is essentially a main air inlet or a fresh air inlet, recirculated air can at least partially be re-used and added into the passenger compartment, the cabin, again which allows for a fast start-up heating, since the recirculated air would not need to be heated in the same amount as fresh outside air. Recirculation of air by means of such recirculation air inlets and the relevant duct pipes from the recirculation air inlet to the main or fresh air inlet also improves temperature distribution in the cabin.

According to a specific embodiment of the invention the installation comprises of a first and a second recirculation air inlet and the relevant duct pipes from said first and second recirculation air inlet to the main air inlet, where the first recirculation air inlet is positioned in the front of the cabin and where the second recirculation air inlet is provided in the back of the cabin which essentially allows for a better substitution of air when the driver is sleeping in the back of the cabin.

If the installation comprises of a first or a hot air path for the parking heater and a second or cold air path for cold air downstream of the evaporator or the air cooler, this allows for maximised parking heating when the cold air path is closed or for maximised air-conditioning when the cold air path is open. For this account a shutoff valve is provided in the cold air path.

Maximising air conditioning or maximising parking heating is facilitated due to the first and the second air path being provided as parallel air paths downstream of the evaporator or the air cooler.

The installation further comprises of a common air duct downstream of said first and second air path, an air mix valve downstream of the common air duct, parallel air ducts downstream of the air mix valve and the distribution case downstream of the parallel air ducts.

Preferably, the heater or heat exchanger is provided in one of the parallel air ducts, downstream of the air mix valve and located inside the parallel air ducts in a way which essentially allows that only warm air from the hot air path by-passes the heater or heat exchanger.

Downstream of the parallel air ducts with the heater or heat exchanger is the distribution case which allows for mixing and distributing cold and hot air into the cabin.

Preferably, all the HVAC modules, namely the air filter and the parking heater or the air filter, the parking heater, or at least a parking heater heat exchanger, and the heater or heat exchanger are located inside of a passenger compartment firewall. Beneficially the HVAC modules above can be maintenanced or serviced from the outside of the passenger compartment firewall.

The installation as described above comprises of the following modules or units in the following order: a fan downstream of the main or fresh air inlet, an air filter downstream of the fan, the evaporator or air cooler downstream of the air filter, the first or hot air path for the parking heater and the second or cold air path for the cold air downstream of the evaporator or air cooler, the common air duct downstream of the said first and second air path, the air mix valve downstream of the common air duct, parallel air ducts downstream of the air mix valve and the distribution case downstream of the parallel air ducts.

Other features and advantages of the present invention will appear from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, in which
Fig. 1 is a schematical view of a passenger compartment of a vehicle, and
Fig. 2 is a block diagram of a heating and/or air-conditioning installation according to the invention.

In the following description, for purposes of explanation and not limitation, specific details are set forth such as particular embodiments, techniques, etc., in order to provide a thorough understanding of the present invention. However, it will be apparent to one skilled in the art that the present invention may be practised by other embodiments that depart from these specific details. For example, while the present invention is sometimes described in the context of electrically operated modules or units or modules fuelled by fossil fuels, those skilled in the art will appreciate that the present invention can be implemented by employing other energy sources also.

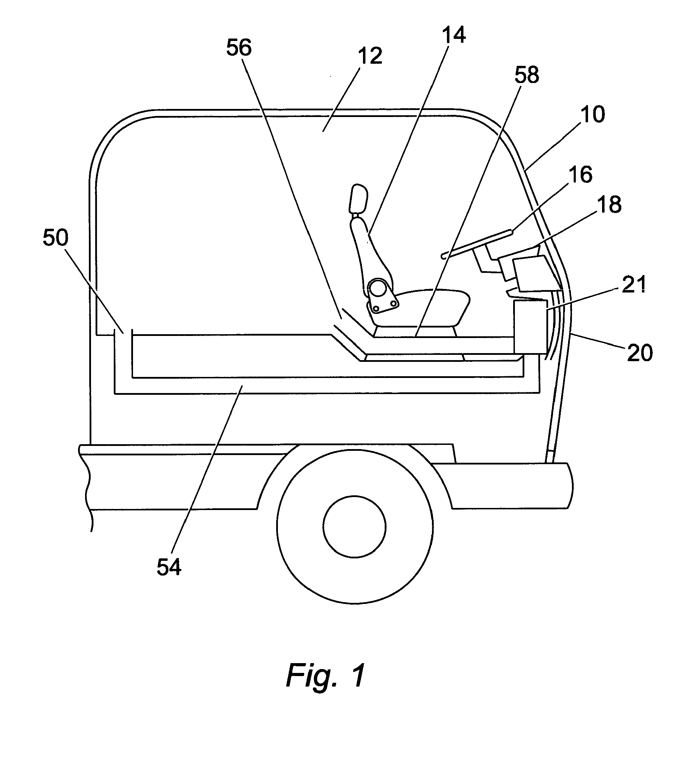

**Fig. 1** shows as an example of a vehicle, the front part of a commercial vehicle **10,** and mainly a passenger compartment **12,** shortly referred to as the cabin 12 in the following, with the usual standard fittings such as a driver's seat **14,** a handwheel **16,** an instrument panel **18** et cetera. The cabin 12 is situated within a passenger compartment firewall **20** or cabin firewall 20. An HVAC installation **21** is shown as a box below the instrument panel 18. Extending from the HVAC installation 21 are a recirculation duct pipe 54 and a rear floor duct pipe 58, both the recirculation duct pipe 54 and the rear floor duct pipe 58 terminating in a recirculation air inlet 50 and a rear floor outlet 56 respectively. A further recirculation duct pipe 52 (not shown in Fig. 1) terminates in a further or "front" recirculation air inlet 48. Furthermore, extending from the HVAC installation 21 are ducts and/or outlets (not shown) for directing the air flow according to the "floor", "ventilation", "defrost" options.

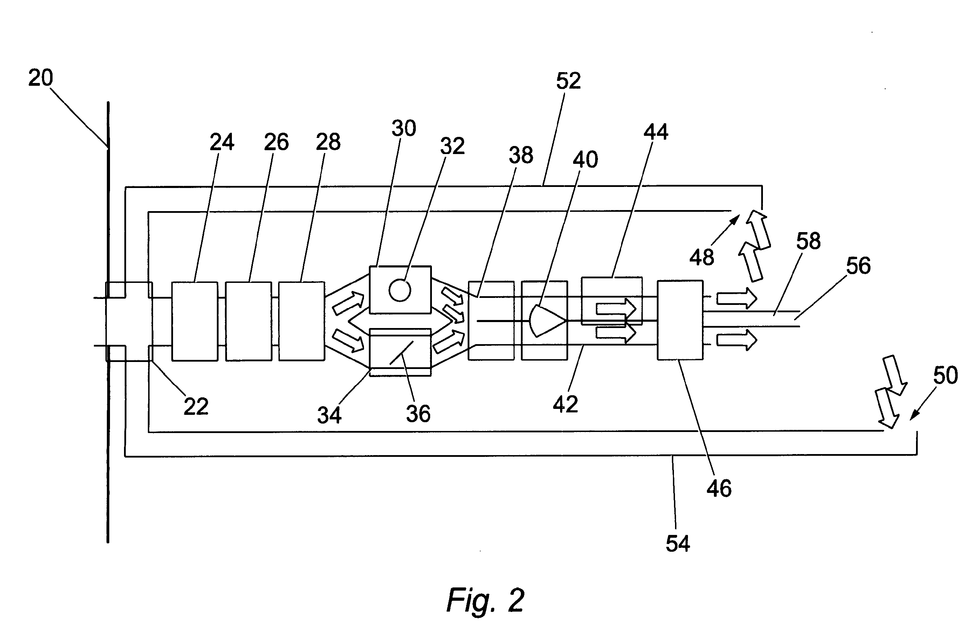

**Fig. 2** shows a block diagram of the installation according to the invention. Adjacent to the cabin firewall 20 is provided an air inlet **22** which for means of distinction is hereinafter also referred to as the main air inlet or the fresh air inlet 22. Downstream of the main air inlet 22 is a fan **24** and a motor (not depicted) for driving the fan 24. Downstream of the fan 24 is an air filter **26** and downstream of the air filter 26 is an evaporator or air cooler **28.** Furthermore, a first or hot air path **30** for a parking heater **32** and a second or cold air path **34** with a shutoff valve **36** provided inside the cold air path 34 is located downstream of the evaporator or air cooler 28. A common air duct **38** is located downstream of said first and second air path 30, 34. An air mix valve **40** is provided downstream of the common air duct 38. And, at least two parallel air ducts **42** with a heater or heat exchanger **44** are provided downstream of the air mix valve 40 in one of said parallel air ducts 42. And finally, a distribution case **46** is provided downstream of the parallel air ducts 42. The distribution case 46 is preferably located in the area of the instrument panel 18 and by means of the distribution case 46 cold and hot air are mixed and directed into the interior of the cabin 12. All the modules 22-46 of the HVAC installation 21, i.e. the fresh air inlet 22 and all further modules 24-46 downstream of the fresh air inlet 22, are located inside the cabin 12.

For air recirculation, i.e. for a better exchange of fresh air and used air the installation further comprises of at least one recirculation air inlet **48, 50,** where the embodiment depicted in Fig. 1 and Fig. 2 shows a first and a second recirculation air inlet 48, 50 (front recirculation air inlet 48; rear recirculation air inlet 50) and a respective duct pipe **52, 54** (recirculation duct pipe) from the or each recirculation air inlet 48, 50 to the main or fresh air inlet 22. Recirculating the air is not only beneficial by means of exchanging used air with fresh air but also by means of improving the temperature distribution in the cabin which gives the driver or a person resting or sleeping in the cabin 12 a convenient feeling.

The air inlet 22 has three setting options. First setting option: OSA or outside air; or second setting option: AC or recirculation air; or a third setting option: recirculation for parking heating.

The function of the shutoff valve 36 is to maximise air-conditioning when open and to maximise parking heating when closed. The air mix valve 40 is preferably a single zone temperature air mix valve. The heater or heat exchanger 44 is preferably a conventional water/glycol heater core connected to the engine coolant loop. And, the distribution case 46 is preferably a distribution case allowing for the options "floor", "ventilation", "defrost" and "rear floor". For the "rear floor" option a rear floor duct 58 terminating in a rear floor outlet 56 is provided. The relevant ducts and/or outlets for the remaining options "floor", "ventilation" and "defrost" are not specifically shown. However, the airflow for these options is schematically indicated by means of the block arrows above and below the rear floor duct 58.

The proposed layout of the installation gives a service advantage for the air filter 26, the evaporator or air cooler 28 and the parking heater 32, or more specifically at least the parking heater burner head, from the outside of the cabin firewall 20. This is beneficial in regards to maintenance and servicing these modules.

A refrigerant secondary loop connection to the cabin 12 will make it possible to install the future refrigerants without any risk to the cabin occupants, regarding fire or toxicity. Future refrigerant media could operate at high pressure with less flexible hoses. And, the refrigerant hose flexibility required by the cabin suspension motion and the cabin tilt for service can get solved with the flexible hoses used in the secondary loop.

The parking heating will only operate as recirculation for maximum performance. The parking heater 44 can be used for fast start-up mobility and parking. For parking cooling four alternative solutions are provided according to a further aspect of the invention: a first alternative would provide for the secondary loop to be connected via a valve and hose arrangement to a cool storage unit outside or inside the cabin 12. A secondary loop water/glycol pump drives the cooling loop. A cool storage would get charged with the vehicle air-conditioning loop via a heat exchanger when driving. According to the second alternative the secondary loop is connected via a valve and hose arrangement to a standalone diesel driven cooling unit outside the cabin 12 and the secondary loop water/glycol pump drives the cooling loop. According to the third alternative a separate electric compact cooling compressor with condenser and water to water heat exchanger is connected in series with the secondary loop via a valve arrangement. The secondary loop water/glycol pump again drives the cooling loop. According to the fourth alternative an electric motor is provided to operate the vehicle's compressor when parked. The secondary loop water/glycol pump drives the cooling loop.

In brief, the invention accordingly provides for an improved Heating and/or Air-Conditioning Installation for heating and/or ventilation of a passenger compartment 12 of a vehicle, more particularly a commercial vehicle, such as a truck 10, said installation comprising an air inlet 22, an evaporator or air cooler 28, a parking heater 32, and a distribution case 46, wherein the parking heater 32 is provided downstream of the evaporator 28 which reduces condensate issues such as flash-fogging and improves maximum airflow for cooling performance.

### List of reference numerals

- 10: (commercial) vehicle
- 12: passenger compartment / cabin
- 14: driver's seat
- 16: handwheel
- 18: instrument panel
- 20: passenger compartment firewall / cabin firewall
- 21: HVAC installation
- 22: air inlet
- 24: fan
- 26: air filter
- 28: evaporator / air cooler
- 30: hot air path
- 32: parking heater
- 34: cold air path
- 36: shutoff valve
- 38: common air duct
- 40: air mix valve
- 42: parallel air ducts
- 44: heater / heat exchanger
- 46: distribution case
- 48: recirculation air inlet
- 50: recirculation air inlet
- 52: duct pipe
- 54: duct pipe
- 56: rear floor outlet
- 58: rear floor duct

## Claims

1. Heating and/or Air-Conditioning Installation for heating and/or ventilation of a passenger compartment (12) of a vehicle, more particularly a commercial vehicle, such as a truck (10), said installation comprising:
an air inlet (22);
an evaporator or air cooler (28);
a parking heater (32); and
a distribution case (46);
**characterised in that** the parking heater (32) is provided downstream of the evaporator (28).

2. The installation of claim 1, further comprising at least one recirculation air inlet (48, 50) inside the passenger compartment (12) and a duct pipe from the or each recirculation air inlet (48, 50) to the air inlet (22).

3. The Installation of claim 1 or claim 2, further comprising of
a first or hot air path (30) for the parking heater (32) and a second or cold air path (34) for cold air downstream of the evaporator or air cooler (28) .

4. The installation of claim 3,
wherein the first and the second air path (30, 34) are parallel air paths downstream of the evaporator or air cooler (28).

5. The installation of claim 3 or claim 4,
wherein a shut-off valve (36) is provided inside the cold air path (34).

6. The Installation of claim 3, 4 or 5, further comprising of
a common air duct (38) downstream of said first and second air path (30, 34);
an air mix valve (40) downstream of the common air duct (38);
parallel air ducts (42) downstream of the air mix valve (40); and
the distribution case (46) downstream of said parallel air ducts (42).

7. The installation of claim 6,
wherein a heater or heat exchanger (44) is provided in the parallel air ducts (42), more particularly in one of the parallel air ducts (42).

8. The installation of any one of the preceding claims wherein the air filter (26) and the parking heater (32) are located inside of a passenger compartment firewall (20).

9. The installation of claim 7, wherein the air filter (26) and the parking heater (32), or at least a parking heater heat exchanger, and the heater or heat exchanger (44) are located inside of a passenger compartment firewall (20).

10. The installation of any one of the preceding claims, comprising
a fan (24) downstream of the air inlet (22);
an air filter (26) downstream of the fan (24);
the evaporator or air cooler (28) downstream of the air filter (26);
the first or hot air path (30) for the parking heater (32) and the second or cold air path (34) for cold air downstream of the evaporator or air cooler (28);
the common air duct (38) downstream of said first and second air path (30, 34);
the air mix valve (40) downstream of the common air duct (38);
the parallel air ducts (42) downstream of the air mix valve (40); and
the distribution case (46) downstream of the parallel air ducts (42).
